# EUROPEAN PATENT SPECIFICATION

(11) **EP 3 302 876 B1**
(45) Date of publication and mention of the grant of the patent: **18.08.2021**
(21) Application number: 16803852.9
(22) Date of filing: 23.05.2016
(51) Int. Cl.: B24B 3/54, B23Q 3/06, B24B 3/36, B24B 41/06

(54) **A JIG DEVICE FOR A GRINDING MACHINE AND A GRINDING MACHINE COMPRISING THE JIG DEVICE**
EINSPANNVORRICHTUNG FÜR EINE SCHLEIFMASCHINE UND SCHLEIFMASCHINE MIT DER EINSPANNVORRICHTUNG
DISPOSITIF DE MONTAGE POUR UNE MACHINE DE MEULAGE ET MACHINE DE MEULAGE COMPRENANT LE DISPOSITIF DE MONTAGE

(30) Priority: 01.06.2015 SE 1550702
(43) Date of publication of application: 11.04.2018
(73) Proprietor: Tormek AB, 711 34 Lindesberg (SE)
(72) Inventor: PERSSON, Håkan, SE-711 31 Lindesberg (SE)
(74) Representative: Ström & Gulliksson AB
(86) International application number: PCT/SE2016/050476
(87) International publication number: WO 2016/195572

(56) References cited:
- EP-A1- 2 883 655
- EP-A1- 2 883 655
- WO-A1-97/33717
- WO-A1-99/56915
- JP-A- 2010 260 128
- SE-L- 8 306 325
- US-A- 2 562 618
- US-B1- 6 676 495

## Description

### Technical Field

The present disclosure generally relates to a jig device for bringing a knife blade to be sharpened into controlled engagement with a grindstone of a grinding machine. The present disclosure also relates to a grinding machine comprising a rotatable grindstone and a support structure, wherein said jig device is removably or irremovably attached to the support structure such that the jig device can be placed tangentially to and closely over, or at, the grindstone.

### Background

There are many known examples of jig devices, or jig means, intended for knife grinding in a grinding machine. In many cases the obtained result with regard to the evenness of the sharpening and the edge angle may be dependent on the skill of the user. In other cases where the skill needed by the user for obtaining a good grinding result is less demanding, the knife may have to be attached, or fixed, in the jig device in a relatively complicated manner.

The European patent application EP 2 883 655 A1 discloses jig means for a grinding machine and a grinding machine comprising the jig means. EP 2 883 655 A1 was filed before, but published after, June 1, 2015. The corresponding United States patent application US 2015/0165582 A1 was also filed before, but published after, June 1, 2015. Document US 2 562 618 A, on which the preamble of claim 1 is based, discloses a jig device for bringing a knife blade to be sharpened into controlled engagement with a grindstone of a grinding machine.

### Summary

It is in view of the above considerations and others that the various embodiments of the present invention have been made.

A general object is to provide an improved jig device for bringing a knife blade to be sharpened into controlled engagement with a grindstone of a grinding machine.

According to a first aspect, there is provided a jig device for bringing a knife blade to be sharpened into controlled engagement with a grindstone of a grinding machine.

Advantageously, the grinding machine is of a type comprising a rotatable grindstone and a support structure, wherein said jig device is removably attachable to said support structure such that the jig device can be placed tangentially to and closely over, or at, the grindstone.

The jig device according to claim 1 comprises a clamp for holding a knife blade. In other words, the clamp may be configured to hold a knife blade. The clamp comprises a first and a second branch, which are joined by a bend. Furthermore, the first branch comprises a backside and a distal end adapted to support an edge of the knife blade in a grinding operation. The jig device also comprises a jig arm having an abutment surface for the clamp and attachment means for attaching the jig arm to a support structure of a grinding machine. Furthermore, the clamp is made of pliable material (e.g., a resilient material such as a polymer material having resilient properties) and the jig arm is made of rigid material (e.g., a metal) such that the knife blade is held firmly and resiliently in the jig device. Still further, the backside of the clamp is attached to the abutment surface of the jig arm and is further oriented, or positioned, relative to the attachment means of the jig arm such that the distal end of the first branch of the clamp faces the grindstone of a grinding machine in operation.

In one embodiment, essentially the entire length of the backside of the first branch abuts against the abutment surface of the jig arm.

In one embodiment, the backside of the first branch is oriented, or placed, relative to the jig arm such that the distal end of the first branch is adapted to be placed tangentially to the grindstone and to face towards a direction that is essentially opposite to a direction of rotation of the grindstone during operation.

According to the invention, the attachment means comprise a hole for engagement with a support bar, e.g. a generally cylindrical rod, of the support structure.

The attachment means further comprise a threaded pin with a knob positioned at the hole. The threaded pin with the knob may be used for fastening the jig device to the support bar of the support structure. Also according to the invention, the attachment means additionally comprise a protruding member for engagement with a support member of the support structure and for positioning the jig device relative to the grindstone.

In some embodiments, the protruding member may have a bent shape which is adapted to engage with a corresponding bent shape of the support member in a male-female connection manner. The bent shape may be arch-shaped. In some embodiments, the protruding member is made of rigid material, such as a rigid polymer material.

In advantageous embodiments, the jig arm is further provided with a scale with desired angles for the grinding of the knife blade to be sharpened. The protruding member may be used to assist in adjusting the desired angle when the protruding member is positioned in locked engagement (i.e., lockably engaged) with the support member of the support structure.

In some embodiments, the earlier-mentioned pliable material is a resilient material. The resilient material may, for example, be a polymer material having resilient properties.

In some embodiments, the earlier-mentioned rigid material may be a metal.

Preferably, but not necessarily, the clamp may comprise a waste material collecting means (or, waste collecting device) adapted to collect waste material from the knife blade during operation. The waste material collecting means may advantageously be positioned at the second branch of the clamp. For example, the waste collecting means may be positioned to face the rotatable grindstone in operation. In some embodiments, the waste collecting means comprises a magnetic element adapted to collect waste material from the knife blade by means of magnetic attraction arising between the magnetic element and any waste material resulting from a knife blade being sharpened during operation.

Another general object is to provide an improved grinding machine with a jig device for bringing a knife blade to be sharpened into controlled engagement with a rotatable grindstone of the grinding machine.

According to a second aspect, there is provided a grinding machine comprising a rotatable grindstone and a support structure including a jig device according to any one of claims 1-13, which is removably attached (or, alternatively, irremovably attached) to the support structure such that the jig device can be placed tangentially to and closely over, or at, the grindstone. Furthermore, the support structure comprises a support member fixed to the grinding machine and extending in a direction which is substantially perpendicular to a rotational axis of the grindstone. The support structure also comprises a support bar (e.g., a generally cylindrical rod) attached to the support member and extending in a direction which is substantially parallel with the rotational axis of the grindstone.

In other words, there is provided a grinding machine comprising a rotatable grindstone and a support structure, wherein the support structure comprises a support member fixed to the grinding machine and extending in a direction which is substantially perpendicular to a rotational axis of the grindstone, and a support bar (e.g., a generally cylindrical rod) attached to the support member and extending in a direction which is substantially parallel with the rotational axis of the grindstone. A jig device for bringing a knife blade to be sharpened into controlled engagement with the rotatable grindstone is removably or irremovably attached to the support structure of the grinding machine. Furthermore, the jig device comprises a clamp for holding a knife blade. The clamp comprises a first and a second branch joined by a bend. Furthermore, the first branch comprises a backside and a distal end adapted to support an edge of the knife blade in a grinding operation. The jig device also comprises a jig arm having an abutment surface for the clamp and attachment means for attaching the jig arm to a support structure of a grinding machine. Furthermore, the clamp is made of pliable material (e.g., a resilient material) and the jig arm is made of rigid material (e.g., a metal) such that the knife blade is held firmly and resiliently in the jig device. Still further, the backside of the clamp is attached to the abutment surface of the jig arm and is further oriented, or positioned, with respect to the attachment means of the jig arm such that the distal end of the first branch of the clamp faces the grindstone of a grinding machine in operation.

In advantageous embodiments, the support member has a bent shape. The bent shape may be arch-shaped. An arch-shaped support member may include an arch extending upwardly relative to the surface where the support member is fixed to the grinding machine. The support member having the bent shape may further be adapted to receive the protruding member of the jig arm such that the jig arm can be releasably locked to the support member in a male-female connection manner and positioned relative to the grindstone.

### Brief Description of the Drawings

The various embodiments of the invention will be described in further detail below under reference to the accompanying drawings, in which:
Figure 1 is an isometric view of a grinding machine comprising a jig device, in accordance with an embodiment;
Figure 2 is an exploded view of the grinding machine shown in Fig. 1;
Figure 3 is a side view of a jig device attached to a support structure of the grinding machine;
Figures 4-5 schematically illustrate the jig device when a knife blade is resiliently fixed by a clamp of the jig device;
Figure 6 is a side view illustrating the jig device in operation; and
Figures 7A-7E schematically show an embodiment of a jig device from different angles.

### Detailed Description

The present invention will now be described more fully hereinafter. The invention may, however, be embodied in many different forms and should not be construed as limited to the embodiments set forth herein; rather, these embodiments are provided by way of example so that this disclosure will be thorough and complete, and will fully convey the scope of the invention to those persons skilled in the art. Like reference numbers refer to like elements throughout the description.

As will be further detailed herein, this disclosure proposes a jig device 10, or grinding jig, for knives. More particularly, this disclosure proposes a jig device 10 for bringing a knife blade to be sharpened into controlled engagement with a grindstone 31 of a grinding machine 30. The present disclosure also proposes a grinding machine 30 having a rotatable grindstone 31 and a support structure 32 for supporting the jig device 10 in operation. The above-mentioned jig device, or grinding jig, may be removably or irremovably attached to the support structure of the grinding machine such that the jig device can be placed, or positioned, tangentially to and closely over (or at) the rotatable grindstone of the grinding machine.

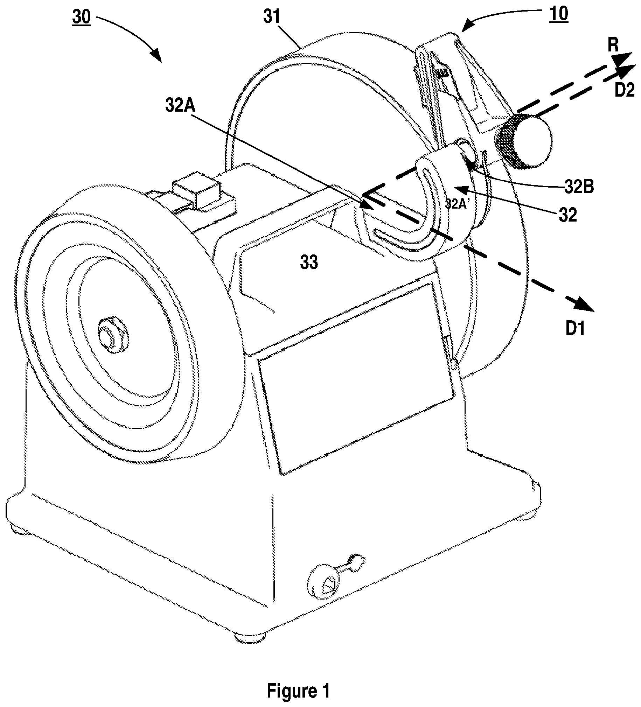

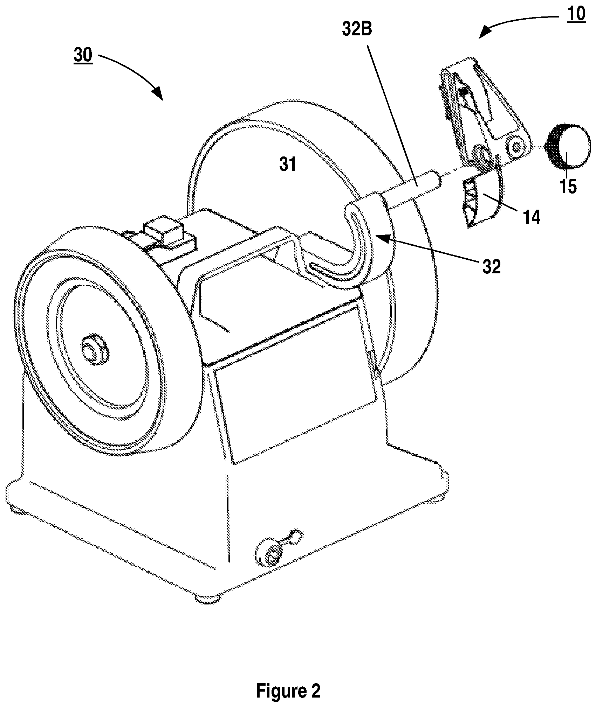

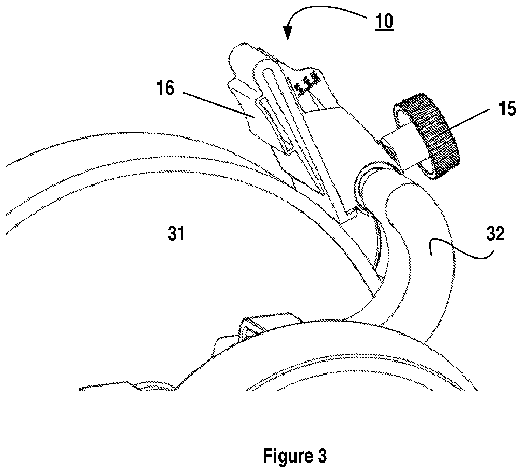

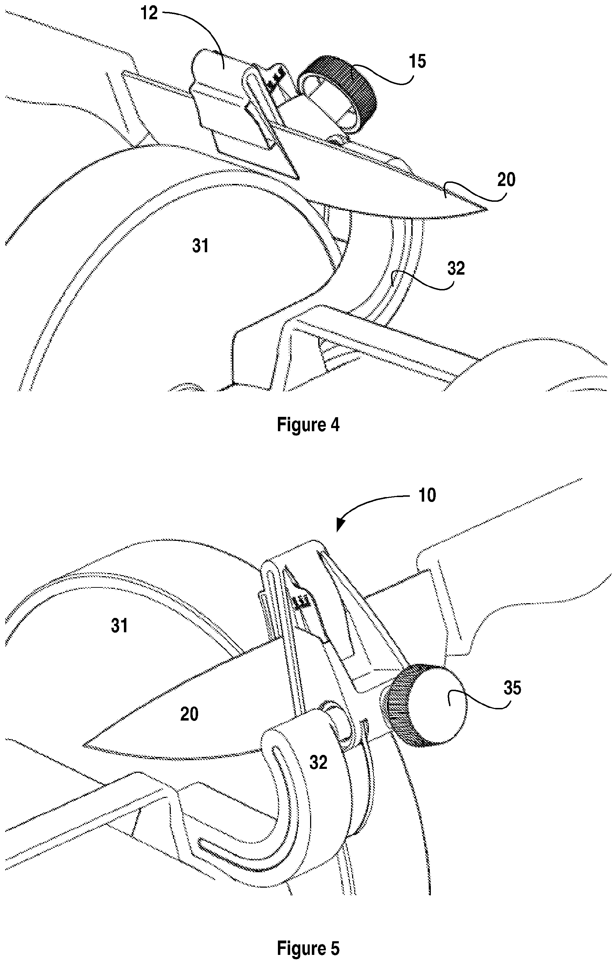

With reference to figures 1-6, an example embodiment of a jig device 10 for bringing a knife blade 20 to be sharpened into controlled engagement with a grindstone 31 of a grinding machine 30 will be described. Figure 1 is a side view of the grinding machine 30, or grinding apparatus, in accordance with an example embodiment. Various embodiments of the jig device 10, or grinding jig, can advantageously be used together with the grinding machine 30 of the type illustrated in figure 1. Figure 2 is an exploded view of the grinding machine 30 shown in figure 1. Figure 3 is a side view of a jig device attached to a support structure of the grinding machine 30 of figures 1 and 2. Furthermore, figures 4 and 5 schematically illustrate the jig device 10 when a knife blade 20 is resiliently fixed by a clamp 12 of the jig device 10.

As can be seen in figures 1-5, the grinding machine 30 comprises a rotatable grindstone 31. The grindstone 31 is rotatable around its rotational axis R, e.g. by means of a motor. In other words, a motor may be provided to drive the rotation of the grindstone 31. For example, the motor may be an electric motor (not shown) placed inside the grinding machine 10.

Furthermore, the grinding machine 30 is provided with a support structure 32.

The support structure 32 comprises a support member 32A fixed to the grinding machine 30, e.g. at a top surface 33 of the grinding machine 30. The support member extends in a direction D1 which is substantially perpendicular to a rotational axis R of the rotatable grindstone 31. A support bar 32B is attached to the support member 32A and further extends in a direction D2 which is parallel, or substantially parallel, to the rotational axis R of the grindstone 31. In this embodiment, the support bar 32B is exemplified by an essentially cylindrical rod.

Preferably, but not necessarily, the support member 32A may have a bent shape. The bent shape may be arch-shaped, as is schematically illustrated in Fig. 1. An arch-shaped support member 32A may hence include an arch 32A', which extends upwardly relative to the surface 33 where the support member 32A is fixed to the grinding machine 30. As is illustrated in Fig. 1, the support bar 32B may be attached to the support member 32A at the distal end of the arch-shaped support member 32A.

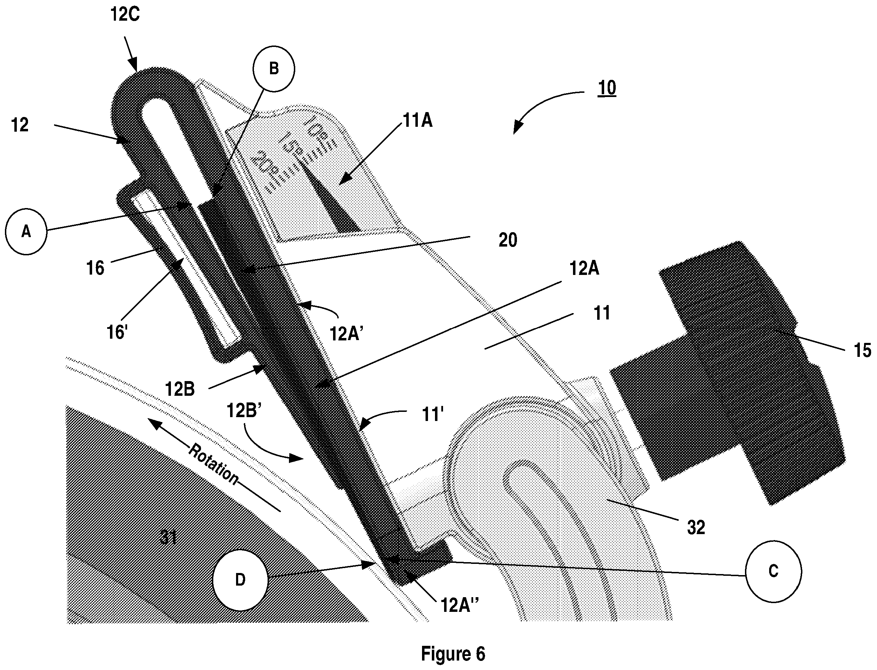

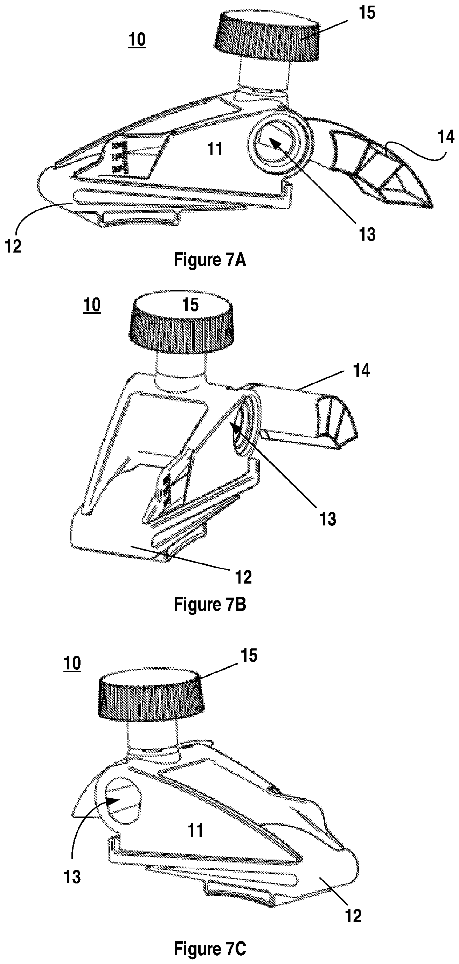

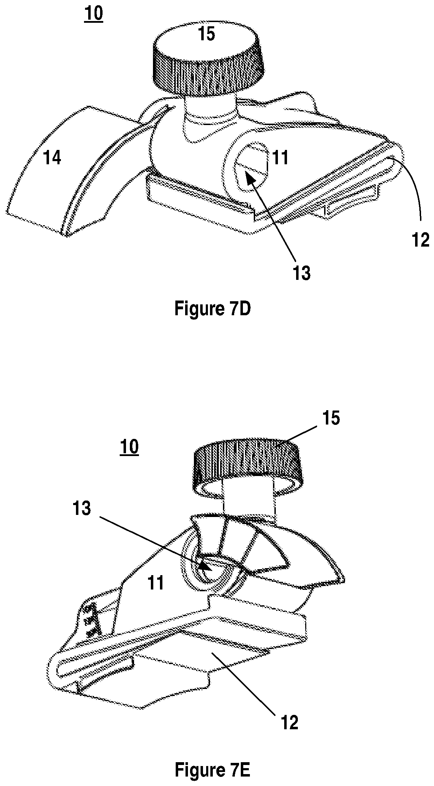

Figure 6 is a side view of the jig device 10 illustrated in figures 1-5. As will be appreciated, this jig device 10 is suitable for bringing a knife blade 20 to be sharpened into controlled engagement with the grindstone 31 of the grinding machine 30. The jig device 10 comprises a clamp 12 for holding the knife blade 20. The clamp 12 has first and second branches 12A and 12B, respectively. The first and second branches 12A, 12B are joined by a bend 12C. The first branch 12A comprises a backside 12A' and a distal end 12A" adapted to support an edge of the knife blade 20. The jig device 10 also comprises a jig arm 11, or jig member. The jig arm 11 comprises an abutment surface 11' for the clamp 12. As is schematically illustrated in figure 5, essentially the entire length of the backside 12A' of the first branch 12A of the clamp 12 may abut against the abutment surface 11' the jig arm 11. The backside 12A' of the clamp 12 may e.g. be removably or irremovably attached to the abutment surface 11' of the jig arm 11. The jig arm 11 further comprises attachment means 13, here exemplified by a hole 13 (see also Figs. 7A-7E), for removably or irremovably attaching the jig arm 11 to the support structure 32 of the grinding machine 30. Furthermore, the backside 12A' of the clamp 12 is oriented, or positioned, relative to the attachment means 13 of the jig arm 11 such that the distal end 12A" of the first branch 12A of the clamp 12 faces the grindstone 31 of the grinding machine 30, in operation. As will be appreciated, the backside 12A' of the first branch 12A should preferably be oriented relative to the jig arm 11 such that the distal end 12A" of the first branch 12A is adapted to be placed tangentially to the grindstone 31 and to face, or point, towards a direction that is essentially opposite to the direction of rotation of the grindstone 31 during operation.

The clamp 12 is made of pliable material, such as a pliable polymer material. Hereby it is made possible to achieve a clamp 12 with resilient properties. The pliable polymer material may e.g. be an Acrylonitrile Butadiene Styrene (ABS) plastic. Other pliable materials with resilient properties are of course also conceivable. As will be appreciated, the clamp 12 may be injection moulded. The resilient properties inherent in the clamp 12 may for example enable reception and fixing of knife blades 20 of different blade thicknesses.

The jig arm 11 is made of rigid material, such as a metal. Hereby it is made possible to provide a stable support of the knife blade 20, in operation. The metal may e.g. be a metal alloy. The jig arm 11 may hence be made of Zinc, Aluminum, steel, brass or cast iron to name a few example materials. Other rigid materials (e.g., rigid polymer materials) are of course also conceivable.

As can be seen in figure 6, the edge of the knife blade 20 can be positioned tangentially to and at the rotatable grindstone 31. A resilient portion 12B' at the distal end of the second branch 12B of the clamp 12 may be used to position the knife blade 20 at the rotatable grindstone 31 prior to the grinding operation. For example, a knife blade 20 may be inserted sideways into the clamp 12. To this end, the resilient properties of the clamp 12 also facilitate the positioning of the knife blade 20 inside the clamp 12. In operation, a backside of the knife blade may be controlled by the clamp 12 at points A and B, respectively, i.e. at points where the clamp 12 is stable and exhibits minimal, or at least limited, resilient properties. At the same time, the edge of the knife blade 20 may be controlled by the clamp 12 at points C and D, respectively. Point C is positioned at the distal end 12A" of the first branch 12A of the clamp 12. Point D is positioned at the grindstone 31. More specifically, point D is positioned at an abutment point of the grindstone 31, i.e. a point of the grindstone 31 at which the edge of the knife blade 20 is abutting during operation.

The resilient properties of the clamp 12 of the jig device 10 may enable reception and resilient fixing of the knife blade 20 before a grinding operation. In operation, the stable support provided by the rigid properties of the jig arm 11 may enable controlled engagement of the edge of the knife blade 20 with the rotatable grindstone 31 of the grinding machine 30. Accordingly, a jig device 10 which is relatively easy to use is provided. The jig device 10 according to the various embodiments disclosed herein is therefore less dependent on the skill of the user, or operator. Moreover, the resilient fixing of a knife blade in the clamp 12 may enable the user to tilt the knife blade 20 during operation so as to get a desired grinding of the edge of the knife blade 20. Hence, the use of the jig device 10 according to the various embodiments disclosed herein may also lead to improved grinding results.

With reference to Figs. 7A-7E, the jig device 10 according to certain embodiments will be described in more detail. As described hereinabove, the jig arm 11 of the jig device 10 comprises attachment means 13. The attachment means 13 may include a hole 13 for engagement with a support bar 32B, e.g. a generally cylindrical rod, of the support structure 32 (see e.g. figures 1-6). In advantageous embodiments, the attachment means may additionally comprise a knob 15, or other fastening member, for fastening the jig device 10 to the support bar 32B of the support structure 32. For example, a threaded pin with the knob 15 may be received in a threaded bore at the hole 13 so that the jig arm 11 of the jig device 10 may be fastened to the support bar 32B in a desired position. Hence, the hole 13 and the knob 15 may together form attachment means for removably or irremovably attaching the jig device 10 to the support structure 32 of the grinding machine 30.

According to the invention, the attachment means comprise a protruding member 14 for engagement with the support member 32A of the support structure 32. In the illustrated embodiment, the protruding member 14 has a bent shape. The bent shape may be arch-shaped. The protruding member 14, which is typically (but not necessarily) made of a rigid material such as a rigid polymer material, is adapted to engage with a corresponding bent shape of the support member 32A in a male-female connection manner.

In some embodiments, the jig arm 11 of the jig device 10 is also optionally provided with a scale 11A (see also figures 1-6) with desired angles for the grinding of the knife blade 20 to be sharpened. As can be seen in the figures, a pointer towards the scale may also be provided to facilitate the adjustment of the desired angle. When fitted into the support member 32A at the grinding machine 30 and by positioning the protruding member 14 in locked engagement with the support member 32A of the support structure 32, the protruding member 14 may be used to assist the user, or operator, to adjust the desired angle for the grinding operation. With continued reference to figure 6, when the protruding member 14 is fitted into the support member 32A at the grinding machine 30, a user may for example apply a force to the jig device 10 to rotate the jig device 10 clockwise or counterclockwise around a rotational axis of the support bar 32B and thereby adjust the desired angle of grinding. During the adjustment of the angle, the scale 11A may assist the user in finding the desired angle and the protruding member 14 engages with the support member 32A to assist the user in setting the desired angle.

In some advantageous embodiments, the clamp 12 of the jig device 10 advantageously also comprises a waste material collecting means 16 adapted to collect waste material from the knife blade 20 during a grinding operation. The waste material collecting means 16 is positioned at the second branch 12B of the clamp 12. Furthermore, the waste collecting means 16 is positioned to face the rotatable grindstone 31 in operation. In one embodiment, which is best illustrated in figures 3 and 5, the waste material collecting means 16 comprises a magnetic element 16'. The magnetic element 16' is adapted to collect waste material from the knife blade 20 by means of a magnetic attraction arising between the magnetic element 16' and any waste material resulting from the sharpened knife blade 20 during a grinding operation. The provision of a waste material collecting means 16 may facilitate for the user to keep the grinding machine 10 clean. Also, an area surrounding the grinding machine 10 may be kept cleaner.

An advantage with the jig device according to the various embodiments described herein is that a knife blade can be easily and resiliently fixed in the clamp of the jig device. Also, the position of the jig device in relation to the grindstone may still be controllable. Stull further, the stable support provided by the rigid properties of the jig arm of the jig device may enable controlled engagement of the edge of the knife blade with the rotatable grindstone of the grinding machine.

In contrast to existing jig devices, the various embodiments of the jig device described herein comprises a clamp with resilient properties which allow for easily mounting of the knife blade into the clamp. At the same time, the rigid properties provided by the jig arm provide a stable support during a grinding operation such that it is possible to achieve sufficient stability during a grinding operation. Accordingly, it is possible to achieve a desired result with regard to the evenness and accuracy of the grinding of the knife blade. In other words, the various embodiments of the jig device may allow for improved grinding results. Moreover, the use the jig device is relatively simple. Accordingly, the use of the jig device is not necessarily dependent on the skill of the user, or operator. Yet further, the design of the jig device is simple and, thus, also relatively inexpensive to manufacture.

Modifications are possible within the scope of the appended claims. Modifications and other variants of the described embodiments will thus come to mind to one skilled in the art having benefit of the teachings presented in the foregoing description and associated drawings. For example, while the embodiments described herein have mainly discussed jig devices for knives those skilled in the art will readily appreciate that the jig device can equivalently be used for other grindable objects too, e.g. scissors. Therefore, it is also to be understood that the embodiments are not limited to the specific example embodiments described in this disclosure and that modifications and other variants are intended to be included within the scope of the appended claims.

Furthermore, although specific terms may be employed herein, they are used in a generic and descriptive sense only and not for purposes of limitation. Therefore, a person skilled in the art would recognize numerous variations to the described embodiments that would still fall within the scope of the appended claims.

## Claims

1. A jig device (10) for bringing a knife blade to be sharpened into controlled engagement with a grindstone (31) of a grinding machine (30), the jig device (10) comprising:
a clamp (12) for holding a knife blade, the clamp (12) comprising a first and a second branch (12A, 12B) joined by a bend (12C), said first branch (12A) comprising a backside (12A') and a distal end (12A") adapted to support the edge of the knife blade in a grinding operation; and
a jig arm (11) having an abutment surface (11') for the clamp (12) and attachment means for attaching the jig arm (11) to a support structure (32) of a grinding machine; wherein
the clamp (12) is made of pliable material and the jig arm (11) is made of rigid material, such that the knife blade can be held firmly and resiliently in the jig device (10); and wherein
the backside (12A') of the clamp (12) is attached to the abutment surface (11') of the jig arm (11) and, furthermore, the backside (12A') of the clamp (12) is positioned relative to the attachment means (13) of the jig arm (11) such that the distal end (12A") of the first branch (12A) of the clamp (12) can face the grindstone (31) of a grinding machine (30) in operation, the jig device (10) being **characterized in that** the attachment means comprise:
a hole (13) for engagement with a support bar (32B) of the support structure (32);
a protruding member (14) for engagement with a support member (32A) of the support structure (32) and for positioning the jig device (10) relative to the grindstone (31); and
a threaded pin with a knob (15), positioned at the hole (13), for fastening the jig device (10) to the support bar (32B) of the support structure (32).

2. The jig device (10) according to claim 1, wherein essentially the entire length of the backside (12A') of the first branch (12A) abuts against the abutment surface (11') the jig arm (11).

3. The jig device (10) according to claim 1 or 2, wherein the backside (12A') of the first branch (12A) is oriented relative to the jig arm (11) such that the distal end (12A") of the first branch (12A) is adapted to be placed tangentially to the grindstone (31) and to face towards a direction that is essentially opposite to a direction of rotation of the grindstone (31) during operation.

4. The jig device (10) according to any one of the claims 1-3, wherein the protruding member (14) has a bent shape which is adapted to engage with a corresponding bent shape of the support member (32A) in a male-female connection manner.

5. The jig device (10) according to claim 4, wherein the protruding member (14) is made of a rigid polymer material.

6. The jig device (10) according to claim 4 or 5, wherein the jig arm (11) is provided with a scale (11A) with desired angles for the grinding of the knife blade (20) to be sharpened, and wherein the protruding member (14) is adapted to assist in adjusting the desired angle when the protruding member (14) is positioned in locked engagement with the support member (32A) of the support structure (32).

7. The jig device (10) according to any one of the claims 1-6, wherein the pliable material is a resilient material.

8. The jig device (10) according to claim 7, wherein the resilient material is a polymer material having resilient properties.

9. The jig device (10) according to any one of the claims 1-8, wherein the rigid material is a metal.

10. The jig device (10) according to any one of the claims 1-9, wherein the clamp (12) comprises a waste material collecting means (16) adapted to collect waste material from the knife blade (20) during operation.

11. The jig device (10) according to claim 10, wherein the waste material collecting means (16) is positioned at the second branch (12B) of the clamp (12).

12. The jig device (10) according to claim 11, wherein the waste collecting means (16) is positioned to face the rotatable grindstone (31) in operation.

13. The jig device (10) according to any one of the claims 10-12, wherein the waste collecting means (16) comprises a magnetic element (16') adapted to collect waste material from the knife blade (20) by means of magnetic attraction arising between the magnetic element (16') and any waste material resulting from a knife blade (20) being sharpened during operation.

14. A grinding machine (30) comprising a rotatable grindstone (31) and a support structure (32), wherein the jig device (10) according to any one of the claims 1-13 is removably or irremovably attached to the support structure (32) such that the jig device (10) can be placed tangentially to and closely over, or at, the grindstone (31) in operation, and wherein
the support structure (32) comprises a support member (32A) fixed to the grinding machine (30) and extending in a direction (D1) which is substantially perpendicular to a rotational axis (R) of the grindstone (31), and a support bar (32B) attached to the support member (32A) and extending in a direction (D2) which is substantially parallel with the rotational axis (R) of the grindstone (31).

## Patentansprüche

1. Einspannvorrichtung (10), um eine zu schärfende Messerklinge in kontrollierten Eingriff mit einem Schleifstein (31) einer Schleifmaschine (30) zu bringen, wobei die Einspannvorrichtung (10) aufweist:
eine Klemme (12) zum Halten einer Messerklinge, wobei die Klemme (12) einen ersten und einen zweiten Arm (12A, 12B) umfasst, die durch einen Bogen (12C) verbunden sind, wobei der erste Arm (12A) eine Rückseite (12A') und ein distales Ende (12A") hat, die dazu ausgeführt sind, die Schneide der Messerklinge bei einem Schleifvorgang abzustützen, und
einen Spannarm (11) mit einer Stützfläche (11') für die Klemme (12) und Befestigungsmitteln zum Anbringen des Spannarms (11) an einer Tragstruktur (32) einer Schleifmaschine, wobei
die Klemme (12) aus biegsamem Material besteht und der Spannarm (11) aus starrem Material besteht, so dass die Messerklinge fest und federnd nachgiebig in der Einspannvorrichtung (10) gehalten werden kann, und wobei
die Rückseite (12A') der Klemme (12) an der Stützfläche (11') des Spannarms (11) befestigt ist und darüber hinaus die Rückseite (12A') der Klemme (12) solchermaßen relativ zu den Befestigungsmitteln (13) des Spannarms (11) positioniert ist, dass das distale Ende (12A") des ersten Arms (12A) der Klemme (12) dem Schleifstein (31) einer Schleifmaschine (30) im Betrieb zugewandt sein kann, wobei die Einspannvorrichtung (10) **dadurch gekennzeichnet ist, dass** die Befestigungsmittel aufweisen:
eine Bohrung (13) für einen Eingriff mit einer Abstützstange (32B) der Tragstruktur (32),
ein vorkragendes Bauteil (14) für einen Eingriff mit einem Stützbauteil (32A) der Tragstruktur (32) und zum Positionieren der Einspannvorrichtung (10) in Bezug auf den Schleifstein (31), und
einen an der Bohrung (13) angeordneten Gewindestift mit einem Knopf (15) zum Befestigen der Einspannvorrichtung (10) an der Abstützstange (32B) der Tragstruktur (32).

2. Einspannvorrichtung (10) nach Anspruch 1, bei der im Wesentlichen die gesamte Länge der Rückseite (12A') des ersten Arms (12A) an der Stützfläche (11') des Spannarms (11) anliegt.

3. Einspannvorrichtung (10) nach Anspruch 1 oder 2, bei der die Rückseite (12A') des ersten Arms (12A) solchermaßen bezüglich des Spannarms (11) orientiert ist, dass das distale Ende (12A") des ersten Arms (12A) dazu eingerichtet ist, tangential zum Schleifstein (31) platziert zu werden und einer Richtung zugewandt zu sein, die einer Drehrichtung des Schleifsteins (31) im Betrieb im Wesentlichen entgegengesetzt ist.

4. Einspannvorrichtung (10) nach einem der Ansprüche 1 bis 3, bei der das vorkragende Bauteil (14) eine gekrümmte Gestalt hat, die dazu eingerichtet ist, mit einer entsprechend gekrümmten Gestalt des Stützbauteils (32A) auf eine männlich/weibliche Verbindungweise in Eingriff zu gelangen.

5. Einspannvorrichtung (10) nach Anspruch 4, bei der das vorkragende Bauteil (14) aus einem starren Polymermaterial besteht.

6. Einspannvorrichtung (10) nach Anspruch 4 oder 5, bei dem der Spannarm (11) mit einer Skala (11A) mit gewünschten Winkeln für das Schleifen der zu schärfenden Messerklinge (20) versehen ist und bei der das vorkragende Bauteil (14) dazu ausgeführt ist, beim Einstellen des gewünschten Winkels mitzuwirken, wenn das vorkragende Bauteil (14) in arretierenden Eingriff mit dem Stützbauteil (32A) der Tragstruktur (32) gebracht wird.

7. Einspannvorrichtung (10) nach einem der Ansprüche 1 bis 6, bei der das biegsame Material ein federndes Material ist.

8. Einspannvorrichtung (10) nach Anspruch 7, bei der das federnde Material ein Polymermaterial mit federnden Eigenschaften ist.

9. Einspannvorrichtung (10) nach einem der Ansprüche 1 bis 8, bei der das starre Material ein Metall ist.

10. Einspannvorrichtung (10) nach einem der Ansprüche 1 bis 9, bei der die Klemme (12) eine Abfallmaterialsammeleinrichtung (16) aufweist, die dazu ausgeführt ist, im Betrieb Abfallmaterial von der Messerklinge (20) zu sammeln.

11. Einspannvorrichtung (10) nach Anspruch 10, bei der die Abfallmaterialsammeleinrichtung (16) an dem zweiten Arm (12B) der Klemme (12) angeordnet ist.

12. Einspannvorrichtung (10) nach Anspruch 11, bei der die Abfallsammeleinrichtung (16) dazu angeordnet ist, im Betrieb dem drehbaren Schleifstein (31) zugewandt zu sein.

13. Einspannvorrichtung (10) nach einem der Ansprüche 10 bis 12, bei der die Abfallsammeleinrichtung (16) ein magnetisches Bauteil (16') aufweist, das dazu eingerichtet ist, Abfallmaterial von der Messerklinge (20) mittels magnetischer Anziehung zu sammeln, die zwischen dem magnetischen Bauteil (16') und jeglichem Abfallmaterial auftritt, welches im Betrieb von einer geschärften Messerklinge (20) stammt.

14. Schleifmaschine (30) mit einem drehbaren Schleifstein (31) und einer Tragstruktur (32), wobei die Einspannvorrichtung (10) nach einem der Ansprüche 1 bis 13 abnehmbar oder nicht abnehmbar an der Tragstruktur (32) solchermaßen angebracht ist, dass die Einspannvorrichtung (10) im Betrieb tangential zum und geringfügig über dem oder an dem Schleifstein (31) platziert werden kann, und wobei
die Tragstruktur (32) ein Stützbauteil (32A), das an der Schleifmaschine (30) befestigt ist und in einer Richtung (D1) verläuft, die im Wesentlichen rechtwinklig zu einer Rotationsachse (R) des Schleifsteins (31) ist, und eine Abstützstange (32B) aufweist, die an dem Stützbauteil (32A) befestigt ist und in einer Richtung (D2) verläuft, die im Wesentlichen parallel zur Rotationsachse (R) des Schleifsteins (31) ist.

## Revendications

1. Dispositif de montage (10) pour amener une lame de couteau à aiguiser en mise en prise contrôlée avec une meule (31) d'une machine de meulage (30), le dispositif de montage (10) comprenant :
un dispositif de serrage (12) pour maintenir une lame de couteau, le dispositif de serrage (12) comprenant une première et une seconde branche (12A, 12B) assemblées par un coude (12C), ladite première branche (12A) comprenant une face arrière (12A') et une extrémité distale (12A") adaptée pour supporter le bord de la lame de couteau lors d'une opération de meulage ; et
un bras de montage (11) ayant une surface de butée (11') pour le dispositif de serrage (12) et des moyens de fixation pour fixer le bras de montage (11) sur une structure de support (32) d'une machine de meulage ; dans lequel :
le dispositif de serrage (12) est réalisé avec un matériau pliable et le bras de montage (11) est réalisé avec un matériau rigide, de sorte que la lame de couteau peut être maintenue de manière ferme et résiliente dans le dispositif de montage (10) ; et dans lequel :
la face arrière (12A') du dispositif de serrage (12) est fixée sur la surface de butée (11') du bras de montage (11) et en outre la face arrière (12A') du dispositif de serrage (12) est positionnée par rapport aux moyens de fixation (13) du bras de montage (11) de sorte que l'extrémité distale (12A") de la première branche (12A) du dispositif de serrage (12) peut faire face à la meule (31) d'une machine de meulage (30) en fonctionnement, le dispositif de montage (10) étant **caractérisé en ce que** les moyens de fixation comprennent :
un trou (13) pour la mise en prise avec une barre de support (32B) de la structure de support (32) ;
un élément en saillie (14) pour la mise en prise avec un élément de support (32A) de la structure de support (32) et pour le positionnement du dispositif de montage (10) par rapport à la meule (31) ; et
une broche filetée avec un bouton (15) positionnée au niveau du trou (13) pour fixer le dispositif de montage (10) sur la barre de support (32B) de la structure de support (32).

2. Dispositif de montage (10) selon la revendication 1, dans lequel essentiellement toute la longueur de la face arrière (12A') de la première branche (12A) vient en butée contre la surface de butée (11') du bras de montage (11).

3. Dispositif de montage (10) selon la revendication 1 ou 2, dans lequel la face arrière (12A') de la première branche (12A) est orientée par rapport au bras de montage (11) de sorte que l'extrémité distale (12A") de la première branche (12A) est adaptée pour être placée de manière tangentielle à la meule (31) et pour être orientée vers une direction qui est essentiellement opposée à une direction de rotation de la meule (31) pendant le fonctionnement.

4. Dispositif de montage (10) selon l'une quelconque des revendications 1 à 3, dans lequel l'élément en saillie (14) a une forme courbée qui est adaptée pour se mettre en prise avec une forme courbée correspondante de l'élément de support (32A) dans un mode de raccordement mâle - femelle.

5. Dispositif de montage (10) selon la revendication 4, dans lequel l'élément en saillie (14) est réalisé avec un matériau polymère rigide.

6. Dispositif de montage (10) selon la revendication 4 ou 5, dans lequel le bras de montage (11) est prévu avec une échelle (11A) avec des angles souhaités pour le meulage de la lame de couteau (20) à aiguiser, et dans lequel l'élément en saillie (14) est adapté pour aider à ajuster l'angle souhaité lorsque l'élément en saillie (14) est positionné en mise en prise verrouillée avec l'élément de support (32A) de la structure de support (32).

7. Dispositif de montage (10) selon l'une quelconque des revendications 1 à 6, dans lequel le matériau pliable est un matériau résilient.

8. Dispositif de montage (10) selon la revendication 7, dans lequel le matériau résilient est un matériau polymère ayant des propriétés résilientes.

9. Dispositif de montage (10) selon l'une quelconque des revendications 1 à 8, dans lequel le matériau rigide est un métal.

10. Dispositif de montage (10) selon l'une quelconque des revendications 1 à 9, dans lequel le dispositif de serrage (12) comprend un moyen de collecte de déchets (16) adapté pour collecter les déchets de la lame de couteau (20) pendant le fonctionnement.

11. Dispositif de montage (10) selon la revendication 10, dans lequel le moyen de collecte de déchets (16) est positionné au niveau de la seconde branche (12B) du dispositif de serrage (12).

12. Dispositif de montage (10) selon la revendication 11, dans lequel le moyen de collecte de déchets (16) est positionné pour faire face à la meule (31) rotative en fonctionnement.

13. Dispositif de montage (10) selon l'une quelconque des revendications 10 à 12, dans lequel le moyen de collecte de déchets (16) comprend un élément magnétique (16') adapté pour collecter les déchets de la lame de couteau (20) au moyen de l'attraction magnétique qui se produit entre l'élément magnétique (16') et les déchets provenant d'une lame de couteau (20) qui est aiguisée pendant le fonctionnement.

14. Machine de meulage (30) comprenant une meule (31) rotative et une structure de support (32), dans laquelle le dispositif de montage (10) selon l'une quelconque des revendications 1 à 13 est fixé de manière amovible ou de manière inamovible à la structure de support (32) de sorte que le dispositif de montage (10) peut être placé de manière tangentielle à ou très près section de réception ou au niveau de la meule (31) en fonctionnement, et dans laquelle :
la structure de support (32) comprend un élément de support (32A) fixé sur la machine de meulage (30) et s'étendant dans une direction (D1) qui est sensiblement perpendiculaire à un axe de rotation (R) de la meule (31) et une barre de support (32B) fixée sur l'élément de support (32A) et s'étendant dans une direction (D2) qui est sensiblement parallèle à l'axe de rotation (R) de la meule (31).
